# EUROPÄISCHE PATENTSCHRIFT

(11) **EP 1 351 895 B1**
(45) Veröffentlichungstag und Bekanntmachung des Hinweises auf die Patenterteilung: **20.10.2004**
(21) Anmeldenummer: 01990312.9
(22) Anmeldetag: 19.12.2001
(51) Int. Cl.: C02F 3/34, C02F 1/56, C02F 1/52, B01D 53/85, C12N 1/00

(54) **VERFAHREN UND KONDITIONIERMITTEL ZUR BEHANDLUNG VON ABWASSER UND LUFTSCHADSTOFFEN**
METHOD AND CONDITIONING AGENT FOR TREATING WASTE WATER AND AIR POLLUTANTS
PROCEDE ET AGENT DE TRAITEMENT POUR LE TRAITEMENT D'EAUX USEES ET DE POLLUANTS ATMOSPHERIQUES

(30) Priorität: 27.12.2000 DE 10065435; 17.04.2001 DE 20022664 U; 08.10.2001 DE 10149447
(43) Veröffentlichungstag der Anmeldung: 15.10.2003
(73) Patentinhaber: Georg Fritzmeier GmbH & Co., D-85655 Grosshelfendorf (DE)
(72) Erfinder: UPHOFF, Christian, 83229 Aschau (DE)
(74) Vertreter: Polte, Willi, Dr.-Ing. Dipl.-Ing.
(86) Internationale Anmeldenummer: PCT/DE2001/004784
(87) Internationale Veröffentlichungsnummer: WO 2002/051756

(56) Entgegenhaltungen:
- EP-A- 0 472 249
- EP-A- 0 503 438
- WO-A-93/25480
- DE-C- 4 212 334
- GB-A- 2 153 834
- US-A- 4 337 313
- US-A- 4 879 239

## Beschreibung

Die Erfindung betrifft ein Verfahren und ein Konditioniermittel zur Behandlung von Abwasser und Luftschadstoffen.

Bei der biologischen Abwasserbehandlung setzen Mikroorganismen die organisch verwertbaren Inhaltsstoffe des aufzubereitenden Abwassers zu Zellmaterial oder zu Gasen, wie beispielsweise CO₂, Methan, Schwefelwasserstoff und anderen um. Je nach Verfahrensführung unterscheidet man aerobe oder anaerobe Verfahren, wobei bei kommunalen Abwasserkläranlagen in der Regel die besser beherrschbaren aeroben Verfahren verwendet werden. Bei derartigen Abwasseraufbereitungsanlagen ist einer mechanischen Klärung ein biologischer Abbau in einem Belebtschlammbecken nachgeschaltet, in dem der Träger der biologischen Reinigung, d.h. der mit Mikroorganismen belebte Schlamm aufgenommen ist. In dieses Belebtschlammbecken wird Luft eingetragen und somit der zur biologischen Umsetzung erforderliche Sauerstoff geliefert. Bei dieser Belüftung des Abwassers im Belebtschlamm- oder Belüftungsbecken bilden sich schleimige, makroskopisch erkennbare Flocken, die sich bei Beendigung der Belüftung als Bodenschlamm absetzen.

Gemäß der Veröffentlichung www.uni-potsdamm.de/u/putz/oktober 1996/30.htm werden zur Erhöhung des Wirkungsgrades der biologischen Umsetzung dem Abwasser organische oder anorganische Polymere zugesetzt, die das Flockenwachstum unterstützen. Die Polymere sind so ausgelegt, dass sich möglichst kompakte und dichte, eine gering zerklüftete Oberfläche aufweisende Flocken bilden, die sich zu größeren Flockenverbänden zusammenlagern und somit unempfindlich gegen die Einwirkung von Scherkräften durch die Abwasserströmung sind.

Derartige Flockungshilfsmittel sind Polymere mit je nach Aufgabenstellung unterschiedlicher Ladungsdichte, Ladungsverteilung und Molekülgröße. Sie werden zur Separation von Feststoffen aus Suspensionen mit organischen oder anorganischen Partikeln, die bis zur kolloidalen Konsistenz verteilt sein können, eingesetzt. Aufgrund des hohen Adsorptionspotentials wirken Flockungshilfsmittel als Bindeglied zwischen den festen Partikeln und den durch den Einsatz von Flockungsmitteln entstandenen Mikroflocken, die zu größeren Flocken zusammengeballt werden (Flockulation).

Neben den als Flockungshilfsmitteln wirkenden Polymeren kann das Konditioniermittel noch Fällungs- und Flockungsmittel enthalten. In der Abwasserreinigung werden als Flockungsmittel häufig Al- oder Fe-Salze eingesetzt, die in bestimmten pH-Bereichen flockenartige Niederschläge mit sehr großer Oberfläche bilden. An diesen Flocken können Schwermetalle oder andere unerwünschte Abwasserinhaltsstoffe adsorbiert werden. Bei der Abwasserreinigung werden als Fällungsmittel monomere Salze, bspw. von Aluminium, Calcium, Eisen und Magnesium bzw. polymere Aluminium- oder Eisenverbindungen verwendet.

Trotz erheblicher Fortschritte in der Polymerchemie können die bestehenden Konditioniermittel nur auf eine durchschnittliche Zusammensetzung des zu behandelnden Abwassers ausgelegt werden, wobei es insbesondere bei Schwankungen der Biosphäre, d.h. des Anteils an organik im zu behandelnden Abwasser vorkommen kann, dass die biologische Umsetzung nicht den Anforderungen genügt.

Demgegenüber liegt der Erfindung die Aufgabe zugrunde, ein Konditioniermittel und ein Verfahren zur Behandlung von Abwasser und Luftschadstoffen zu schaffen, durch das eine weitestgehend von Schwankungen der im Abwasser vorhandenen Biosphäre unabhängige Abwasserbehandlung ermöglicht ist.

Diese Aufgabe wird durch ein Konditioniermittel gemäß Patentanspruch 1, ein Verfahren mit den Merkmalen des Patentanspruchs 10 sowie eine Verwendung des Konditioniermittels gemäß Patentanspruch 15 gelöst.

Erfindungsgemäß enthält das Konditioniermittel einen vorbestimmten Anteil an Mikroorganismen, so dass die biologische Aktivität im wesentlichen durch die im Konditioniermittel enthaltenen mikrobiotischen Mischkulturen bestimmt und somit weitestgehend unabhängig von der zufallsbedingten Zusammensetzung der im Abwasser oder der Luft enthaltenen Mikroorganismen ist. Wie im folgenden noch näher beschrieben wird, bildet sich beim Einbringen des die Polymere und Mikroorganismen enthaltenden Konditioniermittels an der Oberfläche der an den Polymeren entstehenden Flocken ein stabiler Biofilm aus, der auch bei hoher Turbulenz des Abwassers nicht zerstört wird. Dadurch wird mit Bezug zur Flocke eine Immobilisierung der Mikroorganismen erreicht, so dass weitestgehend ideale Bedingungen für die biologische Umsetzung geschaffen werden.

Es zeigte sich überraschender Weise, dass sich das Konditioniermittel auch zur Reinigung von mit Schadstoffen beladener Luft eingesetzt werden kann.

Bei einem Ausführungsbeispiel enthält das Konditioniermittel eine mikrobiotische Mischkultur, die einen Anteil an photosynthetisch arbeitenden Mikroorganismen und einen Anteil Leuchtbakterien in einer biologischen Lösung enthält.

Wie eingangs erwähnt, werden als Flockungshilfsmittel Biopolymere und sonstige organische oder anorganische Polymere verwendet. In jünster Zeit finden sogenannte konjugierte Polymere Beachtung, die beim Binden eines bestimmten Stoffes Licht freisetzen. Konjugierte Polymere bestehen aus Halbleitermaterialien und wurden bislang vor allem für physikalisch-technische Zwecke, bspw. für Solarzellen oder Flachbildschirme benutzt. Die Lumineszenz dieser halbleitenden Polymere kann verwendet werden, um die Leuchtbakterien der mikrobiotischen Mischkultur vollständig oder teilweise zu ersetzen.

Die Handhabung und Lagerung des Konditioniermittels ist besonders einfach, wenn die Mikroorganismen zur Lagerung tiefgekühlt oder gefriergetrocknet werden, wobei die Verfahrensbedingungen beim Abkühlen derart gewählt werden müssen, dass keine Schädigung der Mikroorganismen eintritt.

Hinsichtlich der Zusammensetzung der mikrobiotischen Mischkultur sei der Einfachheit halber auf die ältere Patentanmeldung DE 100 62 812 der Anmelderin verwiesen.

Sonstige vorteilhafte Weiterbildungen der Erfindung sind Gegenstand der weiteren Unteransprüche.

Bevorzugte Ausführungsbeispiele der Erfindung werden im Folgenden anhand schematischer Zeichnungen näher erläutert.
Es zeigen:
Figur 1 ein Blockschaubild eines Verfahrens zur biologischen Behandlung von Abwasser und
Figur 2 eine Prinzipdarstellung einer erfindungsgemäßen Flockenbildung.

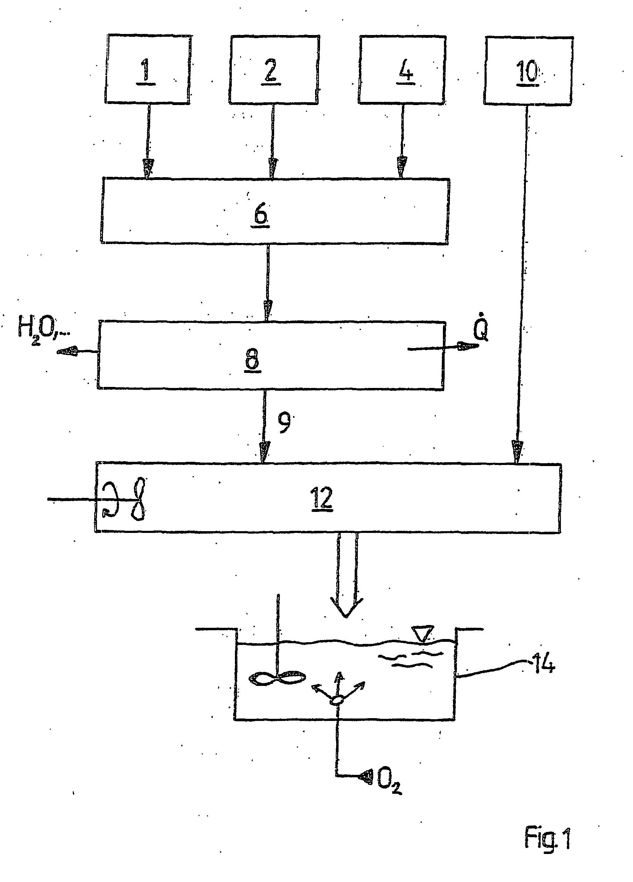

Im folgenden wird anhand der Figur 1 ein Verfahren zur biologischen Behandlung von Abwasser (kommunalem, industriellem Abwasser) beschrieben, bei dem zur Verbesserung des Flockenwachstums dem Abwasser ein Konditioniermittel zugemischt ist, das einen Anteil an Flockungs- und/oder Fällungsmittel sowie Fällungshilfsmittel, beispielsweise organische oder anorganische und auch konjugierte Polymere enthält. Derartige Flockungs- und Fällungsmittel sind Substanzen, die ein Agglomerieren der Schwebeteilchen im Abwasser bewirken und durch die erreichte Vergrößerung der Teilchen eine schnellere Trennung der festen von der flüssigen Phase ermöglichen. Dieses Konditioniermittel kann neben den Polymeren noch weitere Bestandteile, wie beispielsweise Metalle und sonstige, die Flockenbildung unterstützende Bestandteile enthalten. Erfindungsgemäß enthält das Konditioniermittel mikrobiotische Mischkulturen in einer definierten Zusammensetzung, durch die im wesentlichen die metabolischen Reaktionen in der Flocke bestimmt werden.

Gemäß dem anliegenden Verfahrensschema enthält die mikrobiotische Mischkultur (mikrobiologische Zusammensetzung) einen Anteil an photosynthetisch arbeitenden Mikroorganismen 1, einen Anteil an Leuchtbakterien oder ähnlich wirkenden lichtemittierenden Mikroorganismen 2, die in einer breitbandigen biologischen Lösung 4 gelöst sind. Wie eingangs erwähnt, kann ein Teil der lichtemittierenden Mikroorganismen durch konjugierte Polymere ersetzt werden, die bei Anwesenheit bestimmter Biomoleküle in der mikrobiologischen Zusammensetzung Licht emittieren.

Das Wechselspiel zwischen den photosynthetisch arbeitenden Mikroorganismen und den Leuchtbakterien bzw. den konjugierten Polymeren führt dazu, dass die photosynthetisch arbeitenden Mikroorganismen durch das emittierte Licht zur Photosynthese angeregt werden. Die Mikroorganismen betreiben die Photosynthese mit Schwefelwasserstoff und Wasser als Edukt und setzen Schwefel bzw. Sauerstoff frei. Ferner können sie Stickstoff sowie Phosphat binden und organische sowie anorganische Materie abbauen.

Bevorzugt werden in der erfindungsgemäßen mikrobiologische Zusammensetzung photosynthetisch arbeitende Mikroorganismen verwendet, die fakultativ phototroph sind. Phototroph fakultativ bedeutet, dass die Mikroorganismen sowohl unter anaeroben Bedingungen im Licht als auch unter aeroben Bedingungen im Dunklen wachsen können.

Zu den Photosynthesebakterien gehören gramnegative aerobe stabförmige und kreisförmige Bakterien sowie grampositive kreisförmige Bakterien. Diese können Endosporen aufweisen oder ohne Sporen vorhanden sein. Dazu zählen beispielsweise auch grampositive Aktinomyceten und verwandte Bakterien.

In diesem Zusammenhang können auch stickstoffbindende Organismen genannt werden. Dazu gehören beispielsweise Algen, wie Anabena Nostoc in Symbiose mit Azola. Des weiteren können Aktinomyceten, z.B. Frankia in Symbiose mit Erlen und Bakterien, wie Rhizobium in Symbiose mit Leguminosen, erwähnt werden.

Außerdem können auch aerobe Algen, Azotobacter, methanoxidierende Bakterien und Schwefelbakterien verwendet werden. Dazu zählen auch grüne Schwefelbakterien und braungrüne Photosynthesebakterien. Hier können auch nicht violette Schwefelbakterien und violette Schwefelbakterien genannt werden.

Es ist bevorzugt, dass in der erfindungsgemäßen mikrobiologische Zusammensetzung als fakultativ phototrophe Mikroorganismen, Prochlorophyten, Cyanobakterien, grüne Schwefelbakterien, Purpurbakterien, Chloroflexus-ähnliche Formen und Heliobakterium und Heliobacillus-ähnliche Formen enthalten sind. Die vorgenannten fakultativ phototrophen Mikroorganismen können auch als Mischungen aus zwei oder mehr davon vorliegen. In einer ganz besonderen Ausführungsform liegen alle sechs genannten Mikroorganismen als Mischung vor.

Das Licht, das die Photosynthese antreibt, stammt von den Leuchtbakterien, die als zweite essentielle Komponente in der mikrobiologischen Zusammensetzung der vorliegenden Erfindung enthalten sind. Diese Leuchtbakterien besitzen eine Leuchtkraft, d.h. sie sind in der Lage, Lichtquanten auszusenden. Es handelt sich hierbei um ein System, das enzymatisch abläuft. Als Beispiel kann hier das Luciferin-Luciferase-System genannt werden.

In einer bevorzugten Ausführungsform sind in der erfindungsgemäßen Mischung als Leuchtbakterien Photobacterium phosphoreum, Vibrio fischeri, Vibrio harveyi, Pseudomonas lucifera oder Beneckea enthalten. Es ist auch möglich, eine Mischung aus mindestens zwei daraus zu wählen.

Zur Optimierung der erfindungsgemäßen mikrobiologischen Zusammensetzung können weitere Bestandteile darin enthalten sein. Vorzugsweise sind solche Nebenbestandteile Pflanzenextrakte, Enzyme, Spurenelemente, Polysaccharide, Alginderivate, andere Mikroorganismen wie oben. Die Nebenbestandteile können einzeln oder in Kombination in der erfindungsgemäßen mikrobiologischen Zusammensetzung vorliegen. Die Pflanzenextrakte können beispielsweise Spitzwegerich enthalten.

Als Nährlösung für die erfindungsgemäße mikrobiologische Zusammensetzung wird im allgemeinen eine Lösung verwendet, die dazu beiträgt, dass die darin enthaltenen Bestandteile, insbesondere die Mikroorganismen, ohne weiteres darin leben können. Dabei kommt es insbesondere darauf an, dass die Wechselwirkung der Photosynthesebakterien und der Leuchtbakterien vollständig zum Tragen kommt. Es hat sich erwiesen, dass eine biologische Nährlösung mit Melasse, insbesondere Rohzuckermelasse oder Zuckerrübenmelasse als Hauptbestandteil geeignet ist.

Die photosynthetisch arbeitenden Mikroorganismen und die Leuchtebakterien liegen in der erfindungsgemäßen mikrobiologischen Zusammensetzung normalerweise in einem Verhältnis von 1 : 10 bis 1 : 500 vor. Ein bevorzugtes Verhältnis ist 1 : 100.

Die vorbeschriebenen Komponenten werden homogenisiert, so dass als erstes Zwischenprodukt des erfindungsgemäßen Verfahrens eine mikrobiotische Kultur 6 vorliegt, deren Anteile in Abhängigkeit vom zu behandelnden Abwasser eingestellt werden.

In einem sich anschließenden Verfahrensschritt 8 wird das Gemisch tiefgekühlt und gegebenenfalls im Vakuum gefriergetrocknet, so dass das Lösungsmittel, im vorliegenden Fall beispielsweise Wasserbestandteile im gefrorenen Zustand verdampft (Sublimationstrocknung) werden. Eine derartige Dehydratisierung ist ein weit verbreitetes Verfahren zur schonenden Trocknung und Konservierung empflindlicher Güter. Die Trocknungsparameter werden so eingestellt, dass keine Schädigung der Mikroorganismen erfolgt. Bei Vorversuchen zeigte es sich, dass eine Abkühlungsrate mit mehr als 30°C pro Minute, vorzugsweise etwa 40°C pro Minute oder schneller optimal ist, um einer Schädigung der Mikroorganismen vorzubeugen.

Durch diesen Trocknungsschritt werden die die Zellen der Mikroorganismen umgebenden extrazellulären polymeren Substanzen (EPS) dehydratisiert, so dass die schleimige EPS-Schicht eingedickt wird und eine Schutzschicht bildet, die während des Gefriervorganges die Mikroorganismen schützt.

Das erhaltene, dehydratisierte Produkt 9 wird dann in einer Mischstufe 12 mit einem die Polymere enthaltenden Flockungs- oder Fällungsmittel vermischt und diese Mischung mit einer vorbestimmten Konzentration einem zu reinigende Abwasser enthaltende Belebungsbecken 14 zugegeben. Vor dem Vermischen mit dem Flockungs- oder Fällungsmittel 10 wird das Trocknungs-/Gefriergut bei Unterdruck ausgebaut, wobei sich bei ersten Vorversuchen ein Unterdruck von 0,01 Millilbar als vorteilhaft erwiesen hat.

In das Belebtschlammbecken wird Sauerstoff eingeblasen, wobei die verfahrenstechnisch zu lösende Aufgabe darin besteht, den Sauerstoff weitestgehend gleichmäßig zu verteilen und die entstehenden Flocken in der Schwebe zu halten, so dass eine große und gleichmäßig verteilte Stoffaustauschfläche und genügend Sauerstoff zu biologischen Umsetzung zur Verfügung gestellt wird.

Die ins Abwasser eingebrachten Polymere bilden lange Ketten mit einer positiven Oberflächenladung, an denen sich die Organik enthaltenden festen Schwebstoffe, die in der Regel eine negative Oberflächenladung aufweisen, anlagern - es entsteht eine Keimzelle für eine Flocke, deren Wachstum unter anderem von der Art des Flockungsmittels, der Aktivität der Mikroorganismen und der Zusammensetzung des Abwassers abhängt.

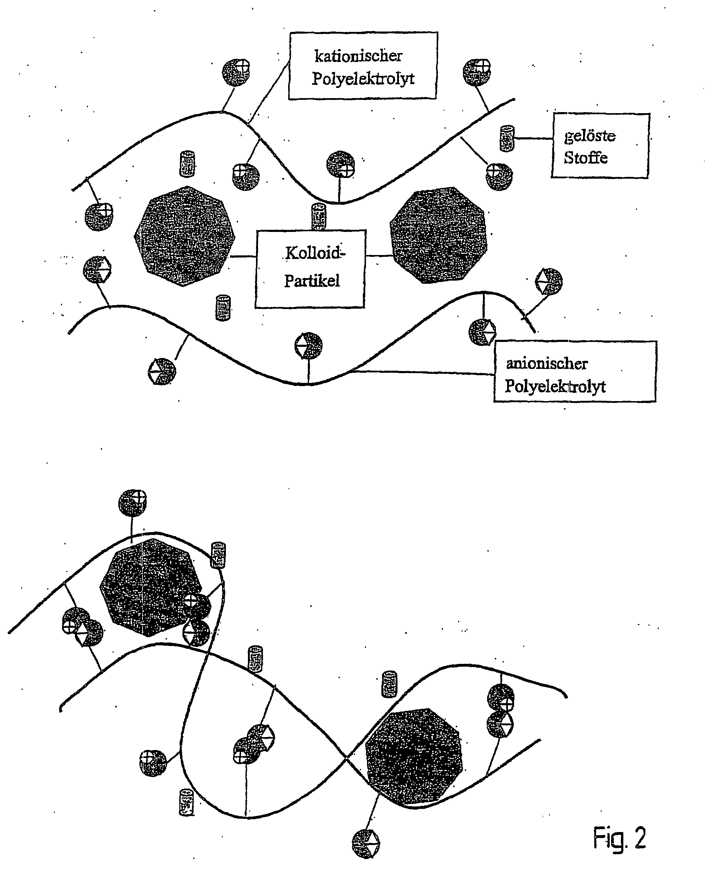

Das erfindungsgemäße Konditioniermittel wirkt als Flockungsmittel, mit dem in einem Abwasser oder einem Gas gelöste bzw. nebelförmig verteilte Stoffe durch Einschlussflockung abgezogen werden können. Der Grundmechanismus dieser Einschlussflockung ist in der Figur 2 dargestellt. Die fadenförmigen kationischen Polyelektrolyte werden beispielsweise durch Protonen freisetzende Archaea und zugesetzte Ladungsträger gebildet, während die anionischen Polyelektrolyte durch Ionen freisetzende Bakterien sowie das negative Ladungsumfeld im Abwasser oder der beladenen Luft zur Verfügung gestellt werden. Insbesondere die.in der Mischung vorhandenen, Protonen freisetzenden Mikroorganismen lagern sich an den im Abwasser vorhandenen Sedimenten an. Diese Kolloidpartikel werden dann, wie in Fig. 2 gezeigt, zwischen den kationischen und anionischen Polyelektrolyten eingeschlossen und zu Makroflocken agglomeriert. Die sich ausbildende Flocke dient somit als Träger für die Mikroorganismen, die sich in und an den Flocken und Kolloidpartikeln anlagern. Es werden Nährstoffe gebunden, die den Mikroorganismen in und an der Flocke für ihr Wachstum zur Verfügung stehen. Bei bestimmten Anwendungsfällen kann es vorteilhaft sein, wenn die Polymere und/oder Mikroorganismen kontinuierlich zugegeben werden.

Bei dem anhand Figur 1 beschriebenen Ausführungsbeispiel wurde das Konditioniermittel zur Behandlung von Abwasser eingesetzt.

Ein weiteres Anwendungsgebiet des erfindungsgemäßen Konditioniermittels besteht in der Reinigung von mit partikelförmigen Schadstoffen beladener Luft oder sonstigen gasförmigen Stoffen. Diese Problemstellung sei anhand eines konkreten Beispiels erläutert.

Zum Verlegen von Korkplatten im industriellen Bereich wurden bis in die 60er Jahre üblicherweise Teerklebstoffe verwendet, die auf der Basis von Steinkohlenteerpech oder Bitumen hergestellt werden. Beim Verlegen der Korkplatten wurden diese Heißklebstoffe direkt auf die Korkplatten gegossen und anschließend an die Wände, Decken und auf den Boden gepresst. Auch bei der Verlegung von Holzpflaster im gewerblichen und industriellen Bereich werden bis heute teer- oder bitumenhaltige Klebstoffe eingesetzt.

Diese Teerklebstoffe werden seit Mitte der 70er Jahre in Deutschland nicht mehr produziert und müssen für diese Zwecke aus dem Ausland importiert werden. Die Einstellung der Produktion von Teerklebstoffen in Deutschland erfolgte freiwillig, da zwischenzeitlich technisch ausgereifte, unschädliche Ersatzprodukte zur Verfügung stehen.

Beim Abbruch oder Umbau von Gebäuden, in denen mit Teerklebstoffen verklebte Materialien verarbeitet wurden, kann eine erhebliche Gesundheitsgefahr der mit dem Abbruch befassten Personen vorliegen, da die Teerklebstoffe äußerst hohe Konzentrationen an polyzyklischen aromatischen Kohlenwasserstoffen (PAK) enthalten. Aus Zwecken der Arbeitssicherheit müssen geeignete Vorkehrungen getroffen werden, um eine Gesundheitsgefährdung durch Staubemissionen und unmittelbaren Hautkontakt auszuschließen. Das heißt, es dürfen nur Fachfirmen eingesetzt werden, wobei möglichst staubarme Arbeitsverfahren mit effektiver Staubabsaugung zu wählen sind. Um die Staubentwicklung beim Ausbrechen der kontaminierten Bauteile zu minimieren, ist eine hinreichende Feuchtigkeitsvernebelung (Befeuchten) vorzusehen. Es zeigte sich überraschender Weise, dass durch Zumischen des erfindungsgemäßen Konditioniermittels zu dem Befeuchtungsmittel (Wasser) die PAK-Konzentration in der Luft wesentlich gegenüber herkömmlichen Lösungen abgesenkt werden kann, so dass die Gesundheitsgefährdung beim Rückbau derartiger kontaminierter Gebäude mit vergleichsweise geringem Aufwand verringert werden kann. Durch den im erfindungsgemäßen Konditioniermittel enthaltenen kationischen Polyelektrolyten werden die freigesetzten PAK-Partikel wieder zu einer Art Flocken zusammengefasst und an die Original-Substanz gebunden.

Wie bereits vorstehend erwähnt, können bei dem erfindungsgemäßen Konditioniermittel anstelle von synthetischen Polymeren auch mikrobielle Biopolymere eingesetzt werden. Dabei lässt sich beispielsweise eine erhebliche Steigerung des Wirkungsgrades durch Zugabe von Chitin erzielen, welches neben Cellulose das am häufigsten vorkommende natürliche Biopolymer ist. Dabei wird durch einen mikrobiellen, biochemischen Abbau von Crustaceen-Chitin Chitosan enzymatisch gewonnen. Chitosan ist positiv ionisch geladen und kann daher im Abwasser oder in der Abluft die negativ geladenen Bestandteile binden. Die bei dem Konditioniermittel einsetzbaren Biopolymere können aus einer Mischung bestehen und lassen sich aus Abfallstoffen der zuckerherstellenden Industrie herstellen. Das Biopolymer ist leicht wasserlöslich mit einer sehr hohen Reaktivität.

Die im erfindungsgemäßen Konditioniermittel enthaltenen Mikroorganismen sind derart ausgewählt, dass bei der Bildung einer Flocke eine schleimartige extrazelluläre polymere Substanz (EPS) produziert wird, in der eine Anzahl an Bakterienzellen eingebettet sind. Durch diese Schleimbildung insbesondere an der Oberfläche der Flocke wird eine Art Schutzschild gegen toxische Substanzen (beispielsweise Schwermetalle) gebildet, das ein Vordringen dieser Substanzen in das Zellinnere verhindert. Die EPS kann auch als Stützgerüst für fadenförmig wachsende Bakterienarten wirken. Eine weitere Wirkung der EPS besteht darin, dass diese als Diffusionsbarriere wirkt, die ein Ausdiffundieren von bei der Umsetzung benötigten Stoffen, wie beispielsweise Exoenzymen verhindert. Des weiteren verwenden Bakterien, die in Symbiose mit anderen Arten leben, die EPS als Mittel, um in räumlicher Nähe zu diesen Bakterien bleiben zu können.

Die Zusammensetzung des Konditioniermittels ist so gewählt, dass die entstehenden Flocken mit einer vollständigen EPS-Schicht umgeben sind, so dass die Abbau- und Umbaureaktionen mit einem äußerst hohen Wirkungsgrad durchgeführt werden kann. Dabei werden die organischen Stoffe des zugeführten Abwassers oder der zu reinigenden beladenen Abluft von der Flocke adsorbiert und oxidiert oder zu neuer Zellsubstanz aufgebaut, wobei ein Teil der Flocke selbst verzehrt wird.

Die eingangs beschriebene Photosynthese findet innerhalb der Flocke statt, so dass diese als ein makroskopischer "Photobioreaktor" wirkt.

Bei ersten Versuchen konnten gute Ergebnisse mit einer Mischung bestehend aus zehn Volumenanteilen gelöster Mikroorganismen auf ein Volumenanteil Polymer erzielt werden. Dabei kann die mikrobiologische Lösung etwa zwei Volumenprozent Mikroorganismen enthalten.

Ein weiterer Vorteil des erfindungsgemäßen Konditioniermittels ist, dass die langen Polymerketten durch die Mikroorganismen gecrackt werden, so dass die Weiterverarbeitung des entstehenden Belebtschlammes vereinfacht ist. Bei bestehenden Anlagen stellten die langkettigen Polymere häufig ein erhebliches verfahrenstechnisches Problem bei der Weiterbehandlung des Schlammes dar. Aufgrund der verbesserten biologischen Umsetzung kann der entstehende Belebtschlamm wesentlich schneller als bei bisher bekannten Verfahren im Faulturm abgebaut werden.

Offenbart ist ein Konditioniermittel zur Behandlung von Abwasser und Abluft, ein Verfahren zur Herstellung eines derartigen Konditioniermittels sowie eine Verwendung des Konditioniermittels, das einen Anteil an Polymere (Biopolymere, konjugierte Polymere, sonstige organische oder anorganische Polymere) enthaltenden Flockungs- oder Fällungsmittel sowie einen Anteil an Mikroorganismen enthält.

## Patentansprüche

1. Konditioniermittel zur Behandlung von Abwasser oder beladener Luft, mit einem Anteil an eine Flockenbildung oder Fällung unterstützenden Polymeren, **gekennzeichnet durch** einen Anteil bestehend aus einer mikrobiotischen Mischkultur, die photosynthetisch arbeitende Mikroorganismen und Leuchtbakterien in einer biologischen Lösung enthält.

2. Konditioniermittel nach Patentanspruch 1, wobei die Mischkultur vor der Vermischung mit den Polymeren tiefgefroren oder gefriergetrocknet ist.

3. Konditioniermittel nach Patentanspruch 1 oder 2, wobei in der Mischung als fakultativ phototrophe Mikroorganismen Prochlorophyten, Cyanobakterien, grüne Schwefelbakterien, Purpurbakterien, Chloroflexus-ähnliche Formen und Heliobakterium und Heliobacillus-ähnliche Formen sowie Mischungen aus zwei oder mehr daraus enthalten sind.

4. Konditioniermittel nach einem der Ansprüche 1 bis 3, wobei in der Mischung als Leuchtbakterien Photobacterium phosphoreum, Vibrio fischeri, Vibrio harveyi, Pseudomonas lucifera oder Beneckea oder Mischungen aus mindestens zwei daraus enthalten sind.

5. Konditioniermittel nach mindestens einem der Patentansprüche 1 bis 4, wobei sie weiterhin als Nebenbestandteile Pflanzenextrakte, Enzyme, Spurenelemente, Polysaccharide, Alginderivate, andere Mikroorganismen, entweder einzeln oder in Kombination, enthält.

6. Konditioniermittel nach einem der vorhergehenden Patentansprüche 1 bis 5, wobei auf zehn Volumenanteile Mischkultur (Mikroorganismus plus Lösung) ein Volumenanteil Flockungshilfsmittel kommt.

7. Konditioniermittel nach einem der vorhergehenden Patentansprüche, wobei das Polymer ein konjugiertes Polymer ist.

8. Konditioniermittel nach einem der Patentansprüche 1 bis 7, wobei das Konditioniermittel Biopolymere enthält.

9. Verfahren zur Herstellung eines Konditioniermittels nach einem der Ansprüche 1 bis 8, mit den Schritten:
- Herstellen eines als Flockungs- oder Fällungsmittel wirkenden Polymers oder einer Polymermischung;
- Herstellen einer mikrobiotischen Mischkultur mit Mikroorganismen in einer biologischen Lösung;
- Vermischen der Mischkultur mit der Polymermischung.

10. Verfahren nach Patentanspruch 9, wobei die Mischkultur tiefgekühlt oder gefriergetrocknet wird.

11. Verfahren nach Patentanspruch 9 oder 10, wobei die Mischkultur auf eine Temperatur unter -50°C abgekühlt wird.

12. Verfahren nach einem der Patentansprüche 9 bis 11, wobei die Mischkultur vor der Vermischung mit der Polymermischung - vorzugsweise bei einem Unterdruck - aufgetaut wird.

13. Verwendung eines Konditioniermittels nach einem der Ansprüche 1 bis 8 für die biologische Aufbereitung von Wasser.

14. Verwendung nach Patentanspruch 13, wobei die Mischkultur beim Einbringen des Konditioniermittels in Abwasser an der Oberfläche einer an den Polymeren entstehenden Flocke einen Biofilm ausbildet.

15. Verwendung eines Konditioniermittels nach einem der Patentansprüche 1 bis 8 zur Bindung von partikelförmigen Luftschadstoffen.

16. Verwendung nach Patentanspruch 15, wobei das Konditioniermittel einem Befeuchtungsmittel zugegeben wird, das nebelartig versprüht wird.

## Claims

1. A conditioning agent for the treatment of effluent or charged air, including a proportion of polymers supporting flake formation or precipitation, **characterized by** a proportion comprised of a microbiotic mixed culture that contains photosynthetically active micro-organisms and luminous bacteria in a biological solution.

2. The conditioning agent as claimed in claim 1, wherein said mixed culture is deep-frozen or freeze-dried prior to being mixed with said polymers.

3. The conditioning agent as claimed in claim 1 or 2, wherein prochlorophytes, cyanobacteria, green sulfur bacteria, purple bacteria, chloroflexus-type forms and heliobacterium and heliobacillus-type forms as well as mixtures of two or more of these are contained in said mixture as facultatively phototropic micro-organisms.

4. The conditioning agent as claimed in any one of claims 1 to 3, wherein photobacterium phosphoreum, Vibrio fischeri, Vibrio harveyi, Pseudomonas lucifera or Beneckea or mixtures of at least two of these are contained in said mixture as luminous bacteria.

5. The conditioning agent as claimed in at least one of claims 1 to 4, wherein plant extracts, enzymes, trace elements, polysaccharides, algin derivatives, other micro-organisms are furthermore contained therein as secondary constituents, either by themselves or in combination.

6. The conditioning agent as claimed in one of the preceding claims 1 to 5, having one volume part of flocculation aids for ten volume parts of mixed culture (micro-organism plus solution).

7. The conditioning agent as claimed in any one of the preceding claims, wherein said polymer is a conjugated polymer.

8. The conditioning agent as claimed in any one of claims 1 to 7, wherein said conditioning agent contains biopolymers.

9. A process for preparing a conditioning agent as claimed in any one of claims 1 to 8, including the steps:
- preparing a polymer or a mixture of polymers acting as a flocculating or precipitating agent;
- preparing a microbiotic mixed culture with micro-organisms in a biological solution;
- mixing said mixed culture with said mixture of polymers.

10. The process as claimed in claim 9, wherein said mixed culture is deep-frozen or freeze-dried.

11. The process as claimed in claim 9 or 10, wherein said mixed culture is cooled down to a temperature below -50°C.

12. The process as claimed in any one of claims 9 to 11, wherein said mixed culture is thawed prior to mixing with said mixture of polymers, preferably under reduced pressure.

13. Use of a conditioning agent as claimed in any one of claims 1 to 8, for biological processing of water.

14. The use as claimed in claim 13, wherein upon introduction of said conditioning agent into effluent, said mixed culture forms a bio-film on the surface of a flake forming on said polymers.

15. Use of a conditioning agent as claimed in any one of claims 1 to 8, for binding particulate atmospheric pollutants.

16. The use as claimed in claim 15, wherein said conditioning agent is added to a wetting agent which is sprayed in the form of a mist.

## Revendications

1. Agent de traitement pour le traitement d'eaux usées ou d'air pollué, comprenant une partie à base de polymères favorisant une floculation ou une précipitation,
**caractérisé en ce qu'**il comprend
une partie constituée d'une culture mixte microbiotique qui contient des microorganismes et des bactéries lumineuses qui travaillent par photosynthèse dans une solution biologique.

2. Agent de traitement selon la revendication 1, dans lequel la culture mixte est surgelée ou lyophilisée avant le mélange avec les polymères.

3. Agent de traitement selon la revendication 1 ou 2, dans lequel des microorganismes facultativement phototropiques contenus dans le mélange sont des prochlorophytes, des cyanobactéries, des thiobactéries vertes, des bactéries pourpres, des formes de type *Chloroflexus, Heliobacterium* et de type *Heliobacillus,* ainsi que des mélanges de deux ou plus d'entre elles.

4. Agent de traitement selon une des revendications 1 à 3, dans lequel les bactéries lumineuses contenues dans le mélange sont *Photobacterium, phosphoreum, Vibrio fischeri, Vibrio harveyi, Pseudomonas lucifera* ou *Beneckea* ou bien des mélanges d'au moins deux d'entre elles.

5. Agent de traitement selon au moins une des revendications 1 à 4, contenant également comme composants auxiliaires des extraits de plantes, des enzymes, des oligoéléments, des polysaccharides, des dérivés d'algine, d'autres microorganismes, seuls ou combinés.

6. Agent de traitement selon une des revendications précédentes 1 à 5, comprenant une partie en volume d'agent auxiliaire de floculation pour dix parties en volume de culture mixte (microorganisme plus solution).

7. Agent de traitement selon une des revendications précédentes, le polymère étant un polymère conjugué.

8. Agent de traitement selon une des revendications 1 à 7, l'agent de traitement contenant des biopolymères.

9. Procédé de fabrication d'un agent de traitement selon une des revendications 1 à 8, selon les étapes suivantes :
- fabrication d'un polymère ou d'un mélange de polymères agissant comme agent de floculation ou de précipitation ;
- fabrication d'une culture mixte microbiotique avec des microorganismes dans une solution biologique ;
- mélange de la culture mixte avec le mélange de polymères.

10. Procédé selon la revendication 9, la culture mixte étant surgelée ou lyophilisée.

11. Procédé selon la revendication 9 ou 10, la culture mixte étant refroidie à une température inférieure à -50°C.

12. Procédé selon une des revendications 9 à 11, la culture mixte étant décongelée avant le mélange avec le mélange de polymères - de préférence par dépression.

13. Utilisation d'un agent de traitement selon une des revendications 1 à 8 pour l'épuration biologique des eaux.

14. Utilisation selon la revendication 13, la culture mixte formant un biofilm à la surface d'un flocon généré sur les polymères, lors de l'introduction de l'agent de traitement dans les eaux usées.

15. Utilisation d'un agent de traitement selon une des revendications 1 à 8 pour lier des polluants atmosphériques sous forme de particules.

16. Utilisation selon la revendication 15, dans lequel un agent d'humidification pulvérisé sous forme de brouillard est ajouté à l'agent de traitement.
